# EUROPEAN PATENT APPLICATION

(11) **EP 4 831 977 A1**
(43) Date of publication of application: **28.10.2026**
(21) Application number: 24920581.6
(22) Date of filing: 05.12.2024
(51) Int. Cl.: G09G 3/32, G09G 3/20, G09G 5/00

(54) **ELECTRONIC DEVICE AND METHOD FOR PROCESSING LAG OF IMAGE TRANSMISSION, AND NON-TRANSITORY COMPUTER-READABLE STORAGE MEDIUM**

(30) Priority: 25.01.2024 KR 20240011732; 20.02.2024 KR 20240024607
(71) Applicant: Samsung Electronics Co., Ltd., Suwon-si, Gyeonggi-do 16677 (KR)
(72) Inventor: LEE, Jaesung, Suwon-si Gyeonggi-do 16677 (KR); KWON, Kyounghwan, Suwon-si Gyeonggi-do 16677 (KR); KIM, Siwoo, Suwon-si Gyeonggi-do 16677 (KR); BAE, Jongkon, Suwon-si Gyeonggi-do 16677 (KR); YANG, Byungduk, Suwon-si Gyeonggi-do 16677 (KR); LEE, Woonyoung, Suwon-si Gyeonggi-do 16677 (KR)
(74) Representative: Gulde & Partner
(86) International application number: PCT/KR2024/019874
(87) International publication number: WO 2025/159331

(57) **Abstract**

An electronic device is described. The electronic device may comprise: at least one processor including a processing circuit; and a display including a display driving circuit and a display panel. The display driving circuit can receive a first portion of an image to be displayed on a first horizontal line of an active area of the display panel from the at least one processor, receive a pulse signal transmitted from the at least one processor in order to synchronize the time in the at least one processor for display on the display panel with the time in the display driving circuit for display on the display panel after the first portion of the image is received, and identify whether a horizontal synchronization signal (HSS) packet for a second portion of the image to be displayed on a second horizontal line of the active area after the first horizontal line is received from the at least one processor within a reference time interval from the time at which the pulse signal was received.

## Description

### Technical Field

The following descriptions relate to electronic devices, methods, and non-transitory computer-readable storage media that process the rack of image transmission.

### Background Art

An electronic device may include a display and a processor. The display may be used to display an image generated (or obtained) by the processor. For example, image transmission from the processor to the display may be executed for display of the image.

The above-described information may be provided as a related art for the purpose of helping to understand the present disclosure. No claim or determination is raised as to whether any of the above-described information may be applied as a prior art related to the present disclosure.

### Disclosure

### Technical Solution

An electronic device is described. The electronic device may include at least one processor including processing circuitry. The electronic device may include a display including display driving circuitry and a display panel. The display driving circuitry may be configured to receive, from the at least one processor, a first portion of an image to be displayed on a first horizontal line of an active area of the display panel. The display driving circuitry may be configured to, after the first portion of the image is received, receive a pulse signal transmitted from the at least one processor to synchronize time in the display driving circuitry for display on the display panel with time in the at least one processor for display on the display panel. The display driving circuitry may be configured to identify whether a horizontal synchronization signal (HSS) packet for a second portion of the image to be displayed on a second horizontal line of the active area next to the first horizontal line is received from the at least one processor within a reference time period being from time receiving the pulse signal. The display driving circuitry may be configured to perform a scan for display on the second horizontal line, based on the HSS packet received within the reference time period. The display driving circuitry may be configured to defer the scan, based on the HSS packet not received within the reference time period.

A method is described. The method may be executed in an electronic device including a display including display driving circuitry and a display panel and at least one processor. The method may include receiving, by the display driving circuitry, from the at least one processor, a first portion of an image to be displayed on a first horizontal line of an active area of the display panel. The method may include receiving, by the display driving circuitry, after the first portion of the image is received, a pulse signal transmitted from the at least one processor to synchronize time in the display driving circuitry for display on the display panel with time in the at least one processor for display on the display panel. The method may include identifying, by the display driving circuitry, whether a horizontal synchronization signal (HSS) packet for a second portion of the image to be displayed on a second horizontal line of the active area next to the first horizontal line is received from the at least one processor within a reference time period being from time receiving the pulse signal. The method may include performing, by the display driving circuitry, a scan for display on the second horizontal line, based on the HSS packet received within the reference time period. The method may include deferring, by the display driving circuitry, the scan, based on the HSS packet not received within the reference time period.

A non-transitory computer readable storage medium is described. The non-transitory computer readable storage medium may store one or more programs. The one or more programs may include instructions that, when executed by an electronic device including a display including display driving circuitry and a display panel and at least one processor, cause the electronic device to receive, from the at least one processor, a first portion of an image to be displayed on a first horizontal line of an active area of the display panel. The one or more programs may include instructions that, when executed by the electronic device, cause the electronic device to, after the first portion of the image is received, receive a pulse signal transmitted from the at least one processor to synchronize time in the display driving circuitry for display on the display panel with time in the at least one processor for display on the display panel. The one or more programs may include instructions that, when executed by the electronic device, cause the electronic device to identify whether a horizontal synchronization signal (HSS) packet for a second portion of the image to be displayed on a second horizontal line of the active area next to the first horizontal line is received from the at least one processor within a reference time period being from time receiving the pulse signal. The one or more programs may include instructions that, when executed by the electronic device, cause the electronic device to perform a scan for display on the second horizontal line, based on the HSS packet received within the reference time period. The one or more programs may include instructions that, when executed by the electronic device, cause the electronic device to defer the scan, based on the HSS packet not received within the reference time period.

An electronic device is described. The electronic device may include a display including display driving circuitry and a display panel. The electronic device may include at least one processor including processing circuitry. The electronic device may include memory, including one or more storage mediums, storing instructions. The instructions may, when executed individually or collectively by the at least one processor, cause the electronic device to transmit, to the display driving circuitry, a first portion of an image to be displayed on a first horizontal line of an active area of the display panel. The instructions may, when executed individually or collectively by the at least one processor, cause the electronic device to, after transmitting the first portion of the image, recognize that transmitting, to the display driving circuitry, a second portion of the image to be displayed on a second horizontal line of the active area next to the first horizontal line is not ready. The instructions may, when executed individually or collectively by the at least one processor, cause the electronic device to, in response to the recognition, cease transmitting a pulse signal to the display driving circuitry to synchronize time in the at least one processor for display on the display panel with time in the display driving circuitry for display on the display panel. The instructions may, when executed individually or collectively by the at least one processor, cause the electronic device to, based on recognizing that transmitting the second portion of the image to the display driving circuitry is ready, resume transmission of the pulse signal and transmit the second portion of the image to the display driving circuitry according to the resumed transmission of the pulse signal.

A method is described. The method may be executed in an electronic device including a display including display driving circuitry and a display panel and at least one processor. The method may include transmitting, to the display driving circuitry, a first portion of an image to be displayed on a first horizontal line of an active area of the display panel. The method may include, after transmitting the first portion of the image, recognizing that transmitting, to the display driving circuitry, a second portion of the image to be displayed on a second horizontal line of the active area next to the first horizontal line is not ready. The method may include, in response to the recognition, ceasing transmitting a pulse signal to the display driving circuitry to synchronize time in the at least one processor for display on the display panel with time in the display driving circuitry for display on the display panel. The method may include, based on recognizing that transmitting the second portion of the image to the display driving circuitry is ready, resuming transmission of the pulse signal and transmitting the second portion of the image to the display driving circuitry according to the resumed transmission of the pulse signal.

A non-transitory computer readable storage medium is described. The non-transitory computer readable storage medium may store one or more programs. The one or more programs may include instructions that, when executed by an electronic device including a display including display driving circuitry and a display panel and at least one processor, cause the electronic device to transmit, to the display driving circuitry, a first portion of an image to be displayed on a first horizontal line of an active area of the display panel. The one or more programs may include instructions that, when executed by the electronic device, cause the electronic device to, after transmitting the first portion of the image, recognize that transmitting, to the display driving circuitry, a second portion of the image to be displayed on a second horizontal line of the active area next to the first horizontal line is not ready. The one or more programs may include instructions that, when executed by the electronic device, cause the electronic device to, in response to the recognition, cease transmitting a pulse signal to the display driving circuitry to synchronize time in the at least one processor for display on the display panel with time in the display driving circuitry for display on the display panel. The one or more programs may include instructions that, when executed by the electronic device, cause the electronic device to, based on recognizing that transmitting the second portion of the image to the display driving circuitry is ready, resume transmission of the pulse signal and transmit the second portion of the image to the display driving circuitry according to the resumed transmission of the pulse signal.

An electronic device is described. The electronic device may include a processor assembly including at least one first processor including processing circuitry and a second processor including processing circuitry. The electronic device may include a display including display driving circuitry and a display panel. The electronic device may include memory, including one or more storage mediums, storing instructions. The instructions may, when executed by the processor assembly, cause the electronic device to generate, by using the at least one first processor, multiple images for an image to be displayed on the display panel. The instructions may, when executed by the processor assembly, cause the electronic device to identify, by using the at least one first processor, a load of the second processor. The instructions may, when executed by the processor assembly, cause the electronic device to, based on the load smaller than a threshold load, provide, by using the at least one first processor, the multiple images to the second processor; generate, by using the second processor, the image in which the multiple images are synthesized; and transmit, by using the second processor, the image generated by using the second processor to the display driving circuitry. The instructions may, when executed by the processor assembly, cause the electronic device to, based on the load greater than the threshold load, generate, by using the at least one first processor, the image in which the multiple images are synthesized; provide, by using the at least one first processor, the image generated by using the at least one first processor to the second processor; and transmit, by using the second processor, the image to the display driving circuitry.

A method is described. The method may be executed in an electronic device having a processor assembly including at least one first processor including processing circuitry and a second processor including processing circuitry and a display including display driving circuitry and a display panel. The method may include generating, by using the at least one first processor, multiple images for an image to be displayed on the display panel. The method may include identifying, by using the at least one first processor, a load of the second processor. The method may include, based on the load smaller than a threshold load, providing, by using the at least one first processor, the multiple images to the second processor; generating, by using the second processor, the image in which the multiple images are synthesized; and transmitting, by using the second processor, the image generated by using the second processor to the display driving circuitry. The method may include, based on the load greater than the threshold load, generating, by using the at least one first processor, the image in which the multiple images are synthesized; providing, by using the at least one first processor, the image generated by using the at least one first processor to the second processor; and transmitting, by using the second processor, the image to the display driving circuitry.

A non-transitory computer readable storage medium is described. The non-transitory computer readable storage medium may store one or more programs. The one or more programs may include instructions that, when executed by an electronic device having a processor assembly including at least one first processor including processing circuitry and a second processor including processing circuitry and a display including display driving circuitry and a display panel, when executed by the processor assembly, cause the electronic device to generate, by using the at least one first processor, multiple images for an image to be displayed on the display panel. The one or more programs may include instructions that, when executed by the electronic device, cause the electronic device to identify, by using the at least one first processor, a load of the second processor. The one or more programs may include instructions that, when executed by the electronic device, cause the electronic device to, based on the load smaller than a threshold load, provide, by using the at least one first processor, the multiple images to the second processor; generate, by using the second processor, the image in which the multiple images are synthesized; and transmit, by using the second processor, the image generated by using the second processor to the display driving circuitry. The one or more programs may include instructions that, when executed by the electronic device, cause the electronic device to, based on the load greater than the threshold load, generate, by using the at least one first processor, the image in which the multiple images are synthesized; provide, by using the at least one first processor, the image generated by using the at least one first processor to the second processor; and transmit, by using the second processor, the image to the display driving circuitry.

### Description of the Drawings

FIG. 1 is a simplified block diagram of an exemplary electronic device.
FIG. 2 illustrates an exemplary method for processing a lag of image transmission by using a pulse signal and a horizontal synchronization signal (HSS) packet.
FIG. 3 illustrates an exemplary method for adaptively synthesizing multiple images for an image to be displayed on a display panel to reduce a lag of image transmission.
FIG. 4 illustrates an exemplary method for processing a lag of image transmission by using a retransmission request.
FIG. 5 illustrates an exemplary method for processing a lag of image transmission by using a graphic random access memory (GRAM).
FIG. 6 is a block diagram of an electronic device in a network environment according to various embodiments.
FIG. 7 is a block diagram of a display module according to various embodiments.

### Mode for Invention

An electronic device may include a display and at least one processor. The display may be used for displaying an image generated (or obtained) by the at least one processor. For example, image transmission from the processor to the display may be executed for display of the image.

For example, the at least one processor may process not only a first task for the image transmission but also second tasks, by using available resources. For example, the at least one processor may process the second tasks while processing the first task. For example, in orer to simultaneously process the first task and the second tasks, the at least one processor may allocate first resources among the resources for the first task and allocate second resources among the resources for the second tasks. As a non-limiting example, an amount of the first resources may be reduced due to a priority of at least a portion of the second tasks higher than a priority of the first task. For example, a lag of the image transmission may occur according to reducing the amount of the first resources. As a non-limiting example, the lag of the image transmission may occur due to an underrun of the at least one processor. As a non-limiting example, the lag of the image transmission may be caused by an underrun of a display processing unit (DPU) (e.g., including processing circuitry) in the at least one processor according to a shortage of the first resources allocated for the image transmission.

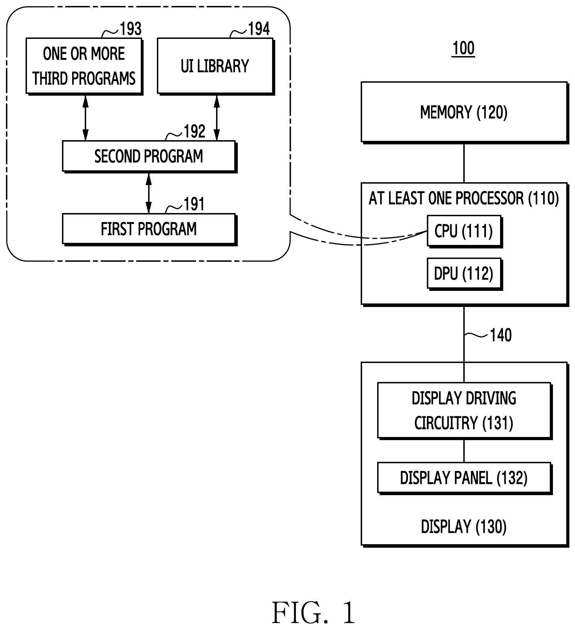

As a non-limiting example, the lag of the image transmission may reduce visual quality of an image displayed on the display. For example, since the lag of the image transmission reduces the visual quality, first operations (or functions (or features)) for processing the lag of the image transmission and/or second operations for reducing occurrence of the lag of the image transmission may be executed (or performed) in the electronic device. Components of the electronic device usable for executing the first operations and/or the second operations are exemplified in the description of FIG. 1.

FIG. 1 is a simplified block diagram of an exemplary electronic device.

Referring to FIG. 1, an electronic device 100 may be one of various types of electronic devices, such as a laptop, smartphones having various form factors (e.g., a bar-type smartphone, a foldable-type smartphone, or a sliderable (or rollable) type smartphone), a tablet, a cellular phone, and other similar computing devices. The components illustrated in FIG. 1, their relationships, and their functions are merely exemplary and do not limit implementations described or claimed in the present document. The electronic device 100 may be referred to as a mobile device, a user device, a multifunction device, a portable device, or a server.

The electronic device 100 may include at least one processor 110, memory 120, and a display 130. The components (e.g., the at least one processor 110, the memory 120, and the display 130) are merely exemplary. For example, the electronic device 100 may include other components (e.g., power management integrated circuitry (PMIC), or a rechargeable battery). For example, some components may be omitted from the electronic device 100. For example, some components may be integrated into one component.

The at least one processor 110 may be implemented as one or more integrated circuitry (IC) chips and may execute various data processing. The at least one processor 110 may include at least one electrical circuitry, and may individually or collectively perform distributed processing of instructions (or programs, data, and the like) stored in the memory 120. The at least one processor 110 may include a processor assembly including one or more processing circuitry. The at least one processor 110 may include any processing circuitry operative to control performance and operations of one or more components (e.g., the memory 120 and/or the display 130) of the electronic device 100. For example, the at least one processor 110 (e.g., an application processor (AP)) may be implemented as a system on chip (SoC) (e.g., a chip or a chip set). For example, the at least one processor 110 may be implemented as multiple cores (or multiple core circuit), multiple chips, or multiple chip sets. For example, the at least one processor 110 may include one or more processing circuits configured to individually and/or collectively perform various functions of the present disclosure. As a non-limiting example, the at least one processor 110 may include a first processor (e.g., including processing circuitry) included in a first chip and a second processor (e.g., including processing circuitry) included in a second chip different from the first chip.

For example, the at least one processor 110 may include a central processing unit (CPU) 111 (e.g., including processing circuitry) and a display processing unit (DPU) 112 (e.g., including processing circuitry). Components (e.g., the CPU 111 and the DPU 112) of the at least one processor 110 are merely exemplary. For example, the at least one processor 110 may further include other components (e.g., a memory controller (or memory control circuitry) for the memory 120, a storage controller (or storage control circuitry) for the memory 120, and a graphic processing unit (GPU) (e.g., including processing circuitry)). For example, some (e.g., the DPU 112 and the GPU) of the components of the at least one processor 110 may be omitted from the at least one processor 110.

The at least one processor 110 may cause other components of the electronic device 100 to perform various operations by executing instructions stored in the memory 120. For example, a central processing unit (CPU) 111 (or a central processing circuitry 111) may be configured to control another component (e.g., a display processing unit (DPU) 112) of the at least one processor 110, based on execution of instructions stored in the memory 120. For example, the DPU 112 (or a display processing circuitry 112) may be configured to process an image obtained (or transmitted) from the CPU 111 in a format suitable for the display 130.

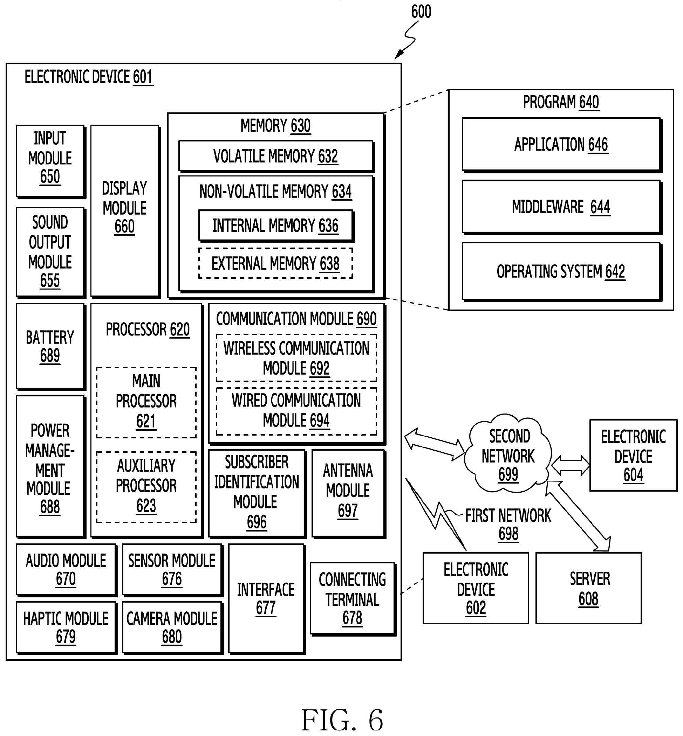

For example, the at least one processor 110 may include at least a portion of the processor 620 of FIG. 6 or may correspond to at least a portion of the processor 620 of FIG. 6.

The memory 120 may include one or more storage mediums (or one or more storage devices). For example, the memory 120 may include a memory assembly including one or more storage mediums. For example, the one or more storage mediums may include a permanent memory such as a hard drive, a flash memory, or a read-only memory (ROM), a semi-permanent memory such as a random access memory (RAM), any other suitable type of storage (or a storage assembly), or any combination thereof. The memory 120 may include a cache memory, which is one or more different types of memory used for temporarily storing data for a function (or feature) of the electronic device 100. As a non-limiting example, the cache memory may be included in the processor 110.

The memory 120 may be fixedly embedded in the electronic device 100 or may be incorporated onto one or more suitably types of components (e.g., a subscriber identity module (SIM) card and/or a secure digital (SD) card) that may be repeatedly inserted into the electronic device 100 and removed from the electronic device 100.

For example, the memory 120 may store one or more software applications, such as an operating system (or a system software application), a firmware software application, a driver software application, a plugin (e.g., add-in, add-on, and/or applet) software application, and/or any other suitable software applications. For example, the one or more software applications may include instructions executable by the at least one processor 110. For example, the memory 120 may store instructions callable by an application programming interface (API). For example, the memory 120 may store instructions in a library.

For example, the memory 120 may store a first program 191 included in a hardware abstraction layer (HAL) to control the display 130 and a second program 192 included in a framework layer to control the display 130. For example, the first program 191 may include instructions for executing (or performing) at least a portion of operations to be exemplified below. For example, the second program 192 may include instructions for executing (or performing) at least another portion of operations to be exemplified below. As a non-limiting example, the first program 191 and the second program 192 may be executable by the CPU 111 among the CPU 111 and the DPU 112.

For example, the memory 120 may store one or more third programs 193 generating at least a portion of images displayed on a display panel 132 and a user interface (UI) library 194 used for generating at least another portion of the images different from the at least a portion of the images generated by the one or more third programs 193. For example, the one or more third programs 193 may include a software application for gaming. As a non-limiting example, the one or more third programs 193 may generate the at least a portion of the images without use of the UI library 194. For example, the UI library 194 may be referred to as a UI toolkit or a user experience (UX) toolkit. For example, the UI library 194 may be used for configuring visual objects in a user interface provided from another programs (not shown) distinguished from the one or more third programs and/or movement of the visual objects. The one or more third programs 193 and the UI library 194 may determine a frame interval. For example, the frame interval may be determined, defined, and/or obtained for executing image transmission from the at least one processor 110 to display driving circuitry 131 at a time (or timing) determined by the at least one processor 110 (e.g., the CPU 111) among the at least one processor 110 and the display 130. The frame interval may indicate a shortest time interval among times (or timings) (e.g., start times) (e.g., end times) respectively generating images by using the second program 192. For example, the frame interval may indicate a shortest time interval between image transmissions from the second program 192 to the first program 191. For example, the frame interval may indicate a shortest time interval between image transmissions from the at least one processor 110 to the display driving circuitry 131, executed for (newly) displaying an image on the display panel 132. For example, the frame interval may be represented by the number of one or more emission periods usable for providing time capable of transmitting an image. For example, the frame interval may indicate a shortest time interval between image transmissions from the at least one processor 110 to the display driving circuitry 131, executed (or to be executed) for changing an image displayed on the display panel 132. For example, since the frame interval indicates the shortest time interval, an ability of the at least one processor 110 capable of executing image transmission at each start time of an emission period for each of pixels in the display panel 132 may be limited due to the frame interval. As a non-limiting example, the one or more third programs 193 may be executable by the CPU 111 among the CPU 111 and the DPU 112. As a non-limiting example, the UI library 194 may be used by the CPU 111.

For example, the memory 120 may include at least a portion of the memory 630 of FIG. 6 or may correspond to at least a portion of the memory 630 of FIG. 6.

The display 130 may be used for display of an image. The display 130 may include display driving circuitry 131 and a display panel 132 for display of an image.

The display driving circuitry 131 may receive an image from the at least one processor 110 (or the DPU 112) through image transmission from the at least one processor 110 (or the DPU 112) to the display driving circuitry 131. The image may be transmitted from the at least one processor 110 (or the DPU 112) to the display driving circuitry 131 through an interface 140. For example, the interface 140 (e.g., including at least one circuitry) may be usable for a first mode (e.g., a video mode of mobile industry processor interface (MIPI) display serial interface (DSI)), a second mode (e.g., a video hybrid mode of MIPI DSI), and/or a third mode (e.g., an adaptive refresh panel (ARP) of MIPI DSI), to be exemplified below. For example, the interface 140 may operate according to the first mode, operate according to the second mode, and/or operate according to the third mode. As a non-limiting example, the interface 140 may include a mobile industry processor interface (MIPI) (or may support the MIPI).

The display driving circuitry 131 may display the image on the display panel 132 by scanning the image. For example, the display driving circuitry 131 may display the image on the display panel 132, by applying (or providing) a gate voltage and a source voltage to the display panel 132 through the scan.

The display driving circuitry 131 may include a graphic random access memory (GRAM) for the second mode. For example, the GRAM may be used for (at least temporarily) storing an image received from the at least one processor 110.

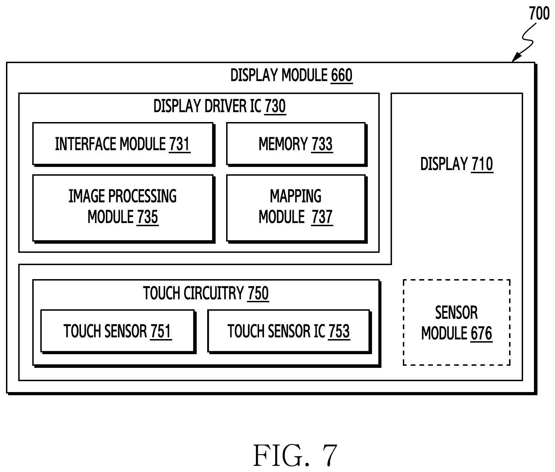

For example, the display driving circuitry 131 may include at least a portion of the display driver IC 730 of FIG. 7 or may correspond to at least a portion of the display driver IC 730 of FIG. 7.

The display panel 132 may display an image according to control of the display driving circuitry 131. For example, the display panel 132 may include sub-pixels. For example, each of the sub-pixels may include a driving transistor and a light-emitting diode. For example, the display panel 132 may display an image according to a gate voltage and a source voltage from the display driving circuitry 131.

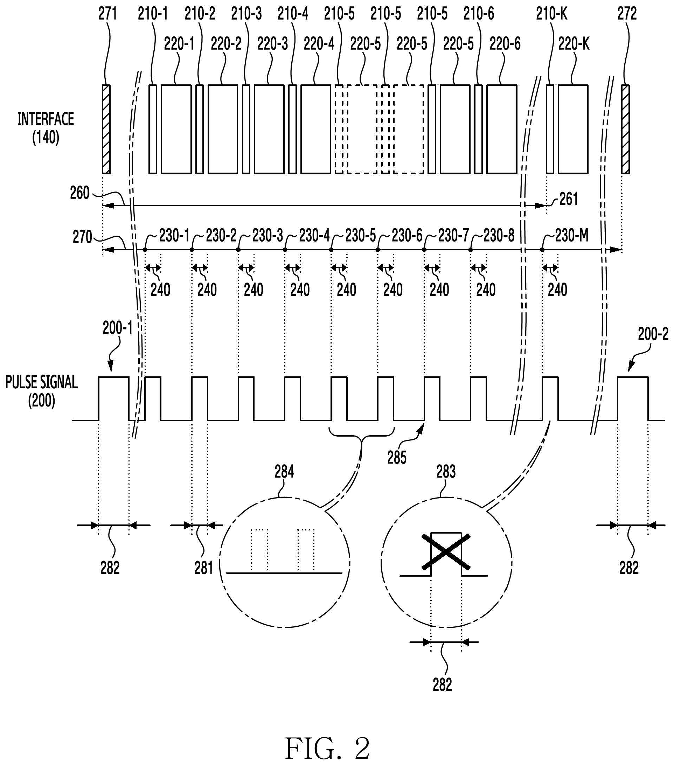

Although not illustrated in FIG. 1, another interface distinguished from the interface 140 may be included in the electronic device 100 to connect the display 130 (or the display driving circuitry 131) to the at least one processor 110 (or the DPU 112). For example, the another interface may be used for a pulse signal (periodically) transmitted from the at least one processor 110 to the display driving circuitry 131. The pulse signal will be exemplified in the description of FIG. 2.

As a non-limiting example, a lag of image transmission from the at least one processor 110 to the display driving circuitry 131 may occur due to an underrun of the at least one processor 110. For example, the lag of the image transmission may occur while the image transmission is in progress. For example, the display driving circuitry 131 may be configured to process the lag of the image transmission. For example, the display driving circuitry 131 may process, before a portion of an image to be displayed on a horizontal line of an active area (or a displaying area) of the display panel 132 is transmitted from the at least one processor 110 to the display driving circuitry 131, the lag of the image by performing a scan for display on the horizontal line or deferring the scan by using a horizontal synchronization signal (HSS) packet transmitted from the at least one processor 110 to the display driving circuitry 131 for the portion of the image. For example, the display driving circuitry 131 may process the lag of the image by performing the scan or deferring the scan, by using the HSS packet and the pulse signal transmitted from the at least one processor 110 to the display driving circuitry 131. The operation is exemplified in the description of FIG. 2.

FIG. 2 illustrates an exemplary method for processing a lag of image transmission by using a pulse signal and a horizontal synchronization signal (HSS) packet.

Referring to FIG. 2, the at least one processor 110 may (periodically) transmit a pulse signal 200 to the display driving circuitry 131. For example, the pulse signal 200 may be transmitted to the display driving circuitry 131 to synchronize at least a portion of operations of the display 130 with at least a portion of operations of the at least one processor 110. For example, the pulse signal 200 may be transmitted to the display driving circuitry 131 to synchronize time in the at least one processor 110 for display on the display panel 132 with time in the display driving circuitry 131 for display on the display panel 132. As a non-limiting example, since the pulse signal 200 is transmitted from outside the display 130 (e.g., the at least one processor 110) for synchronization of the display 130, the pulse signal 200 may be referred to as an external synchronization signal.

For example, a transmission path of the pulse signal 200 may be different from a transmission path of image transmission. For example, the image transmission may be executed through the interface 140, and transmission of the pulse signal 200 may be executed through the another interface.

For example, a transmission period of the pulse signal 200 may correspond to a period of a synchronization signal for the at least one processor 110 used or identified for display on the display panel 132. As a non-limiting example, the transmission period may correspond to a period of a horizontal synchronization signal (HSS) for the at least one processor 110 used for display on the display panel 132 (e.g., a period of the HSS packet).

As a non-limiting example, a waveform of the pulse signal 200 may be changed to indicate a period of another synchronization signal for the at least one processor 110, which is distinguished from the synchronization signal represented by the transmission period and used or identified for display on the display panel 132. As a non-limiting example, the waveform may be changed according to a period of a vertical synchronization signal for the at least one processor 110 and/or a period of an emission synchronization signal (e.g., indicating timing of an emission period (or timing of an emission signal)) for the at least one processor 110. For example, the waveform of the pulse signal 200 transmitted at a start time of the horizontal synchronization signal for the at least one processor 110 corresponding to a start time (or start timing) of the vertical synchronization signal for the at least one processor 110 may be a second waveform different from a first waveform, which is a waveform of a pulse signal transmitted at a start time of the horizontal synchronization signal for the at least one processor 110 not corresponding to (or different from) the start time of the vertical synchronization signal for the at least one processor 110.

The display driving circuitry 131 may display the image on the display panel 132, by scanning the image received from the at least one processor 110 (or the DPU 112) through the image transmission. For example, the image may be displayed on the active area of the display panel 132. For example, the active area may include horizontal lines (or partial areas of the active area corresponding to the horizontal lines). For example, the image may include portions of the image to be respectively displayed on the horizontal lines (or the partial areas). For example, the portions of the image may correspond to each of the horizontal lines. For example, performing a scan of the image received from the at least one processor 110 may include performing a first scan for display on a first horizontal line among the horizontal lines (e.g., corresponding to the first portion of the image) by using a first portion of the image received from the at least one processor 110 among the portions of the image, performing a second scan for display on a second horizontal line among the horizontal lines (e.g., the second horizontal line is a horizontal line next to the first horizontal line and corresponds to the second portion of the image) by using a second portion of the image received from the at least one processor 110 among the portions of the image, ..., performing an N-1th scan for display on an N-1th horizontal line among the horizontal lines (e.g., corresponding to an N-1th portion of the image) by using the N-1th portion of the image received from the at least one processor 110 among the portions of the image, and performing an Nth scan for display on an Nth horizontal line among the horizontal lines (e.g., the Nth horizontal line is a horizontal line next to the N-1th horizontal line and corresponds to an Nth portion of the image) by using the Nth portion of the image received from the at least one processor 110 among the portions of the image.

For example, the display driving circuitry 131 may receive the pulse signal 200 from the at least one processor 110. For example, the display driving circuitry 131 may, in response to the reception of the pulse signal 200, identify (or check) (or monitor) whether an HSS packet for a Kth portion (e.g., K is equal to or greater than 1 and less than N) of the image is received from the at least one processor 110 within a reference time period being from a Kth time at which the pulse signal 200 is received. For example, the display driving circuitry 131 may, based on the HSS packet for the Kth portion of the image received within the reference time period being from the Kth time, perform a Kth scan for display on a Kth horizontal line among the horizontal lines by using the Kth portion of the image received from the at least one processor 110 after (or immediately after) the HSS packet for the Kth portion of the image is received. For example, the display driving circuitry 131 may defer performing the Kth scan based on the HSS packet for the Kth portion of the image not received within the reference time period being from the Kth time. For example, the display driving circuitry 131 may, after deferring the Kth scan, receive the pulse signal 200 received from the at least one processor 110. For example, the display driving circuitry 131 may, in response to the reception of the pulse signal 200, identify whether the HSS packet for the Kth portion of the image is received from the at least one processor 110 within the reference time period being from a K+1th time at which the pulse signal 200 is received. For example, the display driving circuitry 131 may, based on the HSS packet for the Kth portion of the image received within the reference time period being from the K+1th time, perform the Kth scan by using the Kth portion of the image received from the at least one processor 110 after (or immediately after) the HSS packet for the Kth portion of the image is received. For example, the Kth scan deferred according to the HSS packet for the Kth portion of the image not received within the reference time period being from the Kth time may be performed according to the HSS packet for the Kth portion of the image received within the reference time period being from the K+1th time. For example, the display driving circuitry 131 may (again) defer the Kth scan, based on the HSS packet for the Kth portion of the image not received within the reference time period being from the K+1th time.

As a non-limiting example, the display driving circuitry 131 may receive the pulse signal 200 from the at least one processor 110 at a first time 230-1. For example, the display driving circuitry 131 may identify whether an HSS packet 210-1 for a first portion 220-1 of the image is received from the at least one processor 110 within a reference time period 240 being from the first time 230-1. For example, the display driving circuitry 131 may, based on the HSS packet 210-1 received within the reference time period 240 being from the first time 230-1, perform a scan for display on a first horizontal line among the horizontal lines of the active area, by using the first portion 220-1 of the image received after the HSS packet 210-1 is received.

For example, the display driving circuitry 131 may receive the pulse signal 200 from the at least one processor 110 at a second time 230-2. For example, the display driving circuitry 131 may identify whether an HSS packet 210-2 for a second portion 220-2 of the image is received from the at least one processor 110 within the reference time period 240 being from the second time 230-2. For example, the display driving circuitry 131 may, based on the HSS packet 210-2 received within the reference time period 240 being from the second time 230-2, perform a scan for display on a second horizontal line (e.g., next to the first horizontal line) among the horizontal lines of the active area by using the second portion 220-2 of the image received after the HSS packet 210-2 is received. As a non-limiting example, the display driving circuitry 131 may perform the scan for the display on the second horizontal line by performing a count for the second horizontal line based on the HSS packet 210-2 received within the reference time period 240 being from the second time 230-2 (or by counting the second horizontal line based on the HSS packet 210-2 received within the reference time period 240 being from the second time 230-2).

For example, the display driving circuitry 131 may receive the pulse signal 200 from the at least one processor 110 at a third time 230-3. For example, the display driving circuitry 131 may identify whether an HSS packet 210-3 for a third portion 220-3 of the image is received from the at least one processor 110 within the reference time period 240 being from the third time 230-3. For example, the display driving circuitry 131 may, based on the HSS packet 210-3 received within the reference time period 240 being from the third time 230-3, perform a scan for display on a third horizontal line (e.g., next to the second horizontal line) among the horizontal lines of the active area by using the third portion 220-3 of the image received after the HSS packet 210-3 is received. As a non-limiting example, the display driving circuitry 131 may perform the scan for the display on the third horizontal line by performing a count for the third horizontal line based on the HSS packet 210-3 received within the reference time period 240 being from the third time 230-3 (or by counting the third horizontal line based on the HSS packet 210-3 received within the reference time period 240 being from the third time 230-3).

For example, the display driving circuitry 131 may receive the pulse signal 200 from the at least one processor 110 at a fourth time 230-4. For example, the display driving circuitry 131 may identify whether an HSS packet 210-4 for a fourth portion 220-4 of the image is received from the at least one processor 110 within the reference time period 240 being from the fourth time 230-4. For example, the display driving circuitry 131 may, based on the HSS packet 210-4 received within the reference time period 240 being from the fourth time 230-4, perform a scan for display on a fourth horizontal line (e.g., next to the third horizontal line) among the horizontal lines of the active area by using the fourth portion 220-4 of the image received after the HSS packet 210-4 is received. As a non-limiting example, the display driving circuitry 131 may perform the scan for the display on the fourth horizontal line by performing a count for the fourth horizontal line based on the HSS packet 210-4 received within the reference time period 240 being from the fourth time 230-4 (or by counting the fourth horizontal line based on the HSS packet 210-4 received within the reference time period 240 being from the fourth time 230-4).

For example, the display driving circuitry 131 may receive the pulse signal 200 from the at least one processor 110 at a fifth time 230-5. For example, the display driving circuitry 131 may identify whether an HSS packet 210-5 for a fifth portion 220-5 of the image is received from the at least one processor 110 within the reference time period 240 being from the fifth time 230-5. As a non-limiting example, an underrun of the at least one processor 110 may be caused after the fourth portion 220-4 of the image is transmitted from the at least one processor 110 to the display driving circuitry 131. For example, a lag of image transmission from the at least one processor 110 to the display driving circuitry 131 may be caused due to the underrun of the at least one processor 110. For example, the HSS packet 210-5 may not be transmitted from the at least one processor 110 to the display driving circuitry 131 within the reference time period 240 being from the fifth time 230-5, according to the lag of the image transmission. For example, the display driving circuitry 131 may defer a scan for display on a fifth horizontal line (e.g., next to the fourth horizontal line) among the horizontal lines, based on the HSS packet 210-5 not received within the reference time period 240 being from the fifth time 230-5. As a non-limiting example, the display driving circuitry 131 may defer the scan for the display on the fifth horizontal line, by refraining from a count for the fifth horizontal line based on the HSS packet 210-5 not received within a reference time period 240 being from a fifth time 230-5 (or by not counting the fifth horizontal line based on the HSS packet 210-5 not received within the reference time period 240 being from the fifth time 230-5).

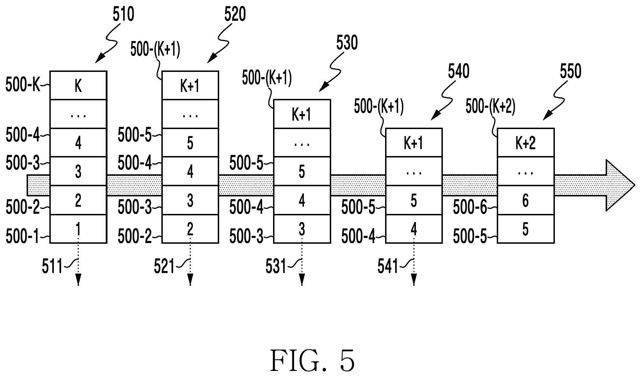

FIG. 5 illustrates an example in which the HSS packet 210-5 is not transmitted according to an underrun of the at least one processor 110, but this is merely exemplary. An underrun of the at least one processor 110 may occur before the fifth portion 220-5 of the image is transmitted based on transmitting the HSS packet 210-5. As a non-limiting example, the display driving circuitry 131 may defer the scan for the display on the fifth horizontal line by refraining from a count for the fifth horizontal line based on the fifth portion 220-5 of the image not received after reception of the HSS packet 210-5 (or by not counting the fifth horizontal line based on the HSS packet 210-5 not received within the reference time period 240 being from the fifth time 230-5).

For example, the display driving circuitry 131 may receive the pulse signal 200 from the at least one processor 110 at a sixth time 230-6. For example, the display driving circuitry 131 may identify whether an HSS packet 210-5 for the fifth portion 220-5 of the image is received from the at least one processor 110 within the reference time period 240 being from the sixth time 230-6. As a non-limiting example, the underrun of the at least one processor 110 caused after transmitting the fourth portion 220-4 of the image may be maintained. For example, the lag of the image transmission may be maintained due to the underrun of the at least one processor 110 maintained after transmitting the fourth portion 220-4 of the image. For example, the HSS packet 210-5 may not be transmitted from the at least one processor 110 to the display driving circuitry 131 within the reference time period 240 being from the sixth time 230-6 according to the lag of the image transmission. For example, the display driving circuitry 131 may defer the scan for the display on the fifth horizontal line, based on the HSS packet 210-5 not received within the reference time period 240 being from the sixth time 230-6. As a non-limiting example, the display driving circuitry 131 may defer the scan for the display on the fifth horizontal line, by refraining from a count for the fifth horizontal line based on the HSS packet 210-5 not received within the reference time period 240 being from the sixth time 230-6 (or by not counting the fifth horizontal line based on the HSS packet 210-5 not received within the reference time period 240 being from the sixth time 230-6).

For example, the display driving circuitry 131 may receive the pulse signal 200 from the at least one processor 110 at a seventh time 230-7. For example, the display driving circuitry 131 may identify whether an HSS packet 210-5 for the fifth portion 220-5 of the image is received from the at least one processor 110 within the reference time period 240 being from the seventh time 230-7. As a non-limiting example, the underrun of the at least one processor 110 caused after transmitting the fourth portion 220-4 of the image may be released. For example, the at least one processor 110 may transmit the HSS packet 210-5 within the reference time period 240 being from the seventh time 230-7 according to release of the underrun of the at least one processor 110. For example, the display driving circuitry 131 may, based on the HSS packet 210-5 received within the reference time period 240 being from the seventh time 230-7, perform the scan for the display on the fifth horizontal line of the active area, by using the fifth portion 220-5 of the image received after the HSS packet 210-5 is received. As a non-limiting example, the display driving circuitry 131 may perform the scan for the display on the fifth horizontal line, by performing a count for the fifth horizontal line based on the HSS packet 210-5 received within the reference time period 240 being from the seventh time 230-7 (or by counting the fifth horizontal line based on the HSS packet 210-5 received within the reference time period 240 being from the seventh time 230-7).

For example, the display driving circuitry 131 may defer, based on an HSS packet (e.g., the HSS packet 210-5) not received within the reference time period 240 being from a time (e.g., the fifth time 230-5) at which the pulse signal 200 is received, a scan (e.g., the scan for the display on the fifth horizontal line) performed by using a portion of the image (e.g., the fifth portion 220-5 of the image) transmitted together with the HSS packet. For example, the display driving circuitry 131 may defer the scan until receiving the HSS packet (e.g., the HSS packet 210-5) from the at least one processor 110 within the reference time period 240 being from another time (e.g., the seventh time 230-7) at which the pulse signal 200 is received.

For example, the display driving circuitry 131 may receive the pulse signal 200 from the at least one processor 110 at an eighth time 230-8. For example, the display driving circuitry 131 may identify whether an HSS packet 210-6 for a sixth portion 220-6 of the image is received from the at least one processor 110 within the reference time period 240 being from the eighth time 230-8. For example, the display driving circuitry 131 may, based on the HSS packet 210-6 received within the reference time period 240 being from the eighth time 230-8, perform a scan for display on a sixth horizontal line (e.g., next to the fifth horizontal line) among the horizontal lines of the active area by using the sixth portion 220-6 of the image received after the HSS packet 210-6 is received. As a non-limiting example, the display driving circuitry 131 may perform the scan for the display on the sixth horizontal line by performing a count for the sixth horizontal line based on the HSS packet 210-6 received within the reference time period 240 being from the eighth time 230-8 (or by counting the sixth horizontal line based on the HSS packet 210-6 received within the reference time period 240 being from the eighth time 230-8).

For example, a time length of an active portion of a vertical synchronization signal targeted for display of the image before the underrun of the at least one processor 110 is caused may correspond to a time interval 260. For example, the at least one processor 110 may extend a time length of the active portion of the vertical synchronization signal to compensate for a lag of the image transmission caused due to the underrun of the at least one processor 110. For example, the at least one processor 110 may transmit, to the display driving circuitry 131, an HSS packet 210-K for a Kth portion 220-K (K is a natural number equal to or greater than 7) of the image at a time 261 corresponding to an end time of the time interval 260, due to the underrun of the at least one processor 110.

For example, the display driving circuitry 131 may receive the pulse signal 200 from the at least one processor 110 at an Mth time 230-M (M is a natural number greater than K). For example, the display driving circuitry 131 may identify whether the HSS packet 210-K for the Kth portion 220-K of the image is received from the at least one processor 110 within the reference time period 240 being from the Mth time 230-M. For example, the display driving circuitry 131 may, based on the HSS packet 210-K received within the reference time period 240 being from the Mth time 230-M, perform a scan for display on a Kth horizontal line among the horizontal lines of the active area, by using the Kth portion 220-K of the image received after the HSS packet 210-K is received. As a non-limiting example, the display driving circuitry 131 may perform the scan for the display on the Kth horizontal line by performing a count for the Kth horizontal line based on the HSS packet 210-K received within the reference time period 240 being from the Mth time 230-M (or by counting the Kth horizontal line based on the HSS packet 210-K received within the reference time period 240 being from the Mth time 230-M).

For example, the at least one processor 110 may, based on completing transmitting the image to the display driving circuitry 131 through the image transmission, transmit, to the display driving circuitry 131, a vertical synchronization signal (VSS) packet 272 for another image next to the image (e.g., may be at least partially different from the image or may be identical to the image). For example, a time length of an active period of a vertical synchronization signal for the image represented by a VSS packet 271 for the image and a VSS packet 272 for the image may correspond to a time interval 270. For example, the at least one processor 110 may extend the time length of the active period of the vertical synchronization signal according to the underrun of the at least one processor 110. For example, the extended time length may correspond to the time interval 270 longer than the time interval 260.

As a non-limiting example, the at least one processor 110 may change a width of the pulse signal 200 to indicate a start time (or start timing) of the vertical synchronization signal. For example, the at least one processor 110 may set a width of a pulse signal 200-1 transmitted to indicate a time at which the VSS packet 271 is transmitted and a width of a pulse signal 200-2 transmitted to indicate a time at which the VSS packet 272 is transmitted, as a second width 282. As a non-limiting example, the second width 282 may be different from a first width 281, which is a width of the pulse signal 200 transmitted at a time at which a VSS packet (e.g., the VSS packet 271 and the VSS packet 272) is not transmitted. As a non-limiting example, the second width 282 may be wider than the first width 281. For example, a time changing a width of the pulse signal 200 may be adjusted by the at least one processor 110, according to deferring the scan executed due to the lag of the image transmission. For example, the at least one processor 110 may maintain the width of the pulse signal 200 transmitted to indicate a time 261 corresponding to an end time of the time interval 260 as the first width 281, as in a state 283. For example, the at least one processor 110 may change a width of the pulse signal 200-2 transmitted to indicate the time at which the VSS packet 272 is transmitted from the first width 281 to the second width 282. For example, a time at which the change from the first width 281 to the second width 282 is performed may be changed from the time 261.

As a non-limiting example, the at least one processor 110 may, based on (or in response to) recognizing that transmitting, to the display driving circuitry 131, a portion of an image (e.g., a fifth portion 220-5 of the image) to be displayed on a horizontal line (e.g., the fifth horizontal line) of the active area of the display panel 132 is not ready, cease transmitting the pulse signal 200 to the display driving circuitry 131. For example, the at least one processor 110 may cease transmitting the pulse signal 200 to the display driving circuitry 131, in response to the underrun of the at least one processor 110. However, it is not limited thereto. For example, the at least one processor 110 may, in response to the underrun of the at least one processor 110, transmit the pulse signal 200 having a third width different from the first width 281 and the second width 282 to the display driving circuitry 131. For example, the third width may indicate the underrun of the at least one processor 110. As a non-limiting example, the pulse signal 200 having the third width may be transmitted at a transmission time (or a transmission timing) of an HSS packet after (or immediately after) the underrun of the at least one processor 110. As a non-limiting example, the pulse signal 200 having the third width may be transmitted at a transmission time of a vertical synchronization signal (VSS) packet after (or immediately after) the underrun of the at least one processor 110. As a non-limiting example, the pulse signal 200 having the third width may be transmitted to refrain from a count for the fifth horizontal line.

For example, the at least one processor 110 may, in response to recognizing that transmitting the fifth portion 220-5 of the image to the display driving circuitry 131 is not ready, cease transmitting the pulse signal 200 to the display driving circuitry 131, as in a state 284. For example, the at least one processor 110 may, based on recognizing that transmitting the fifth portion 220-5 of the image to the display driving circuitry 131 is ready, resume transmission of the pulse signal 200, as in a state 285. For example, the at least one processor 110 may transmit the fifth portion 220-5 of the image to the display driving circuitry 131, according to the resumed transmission of the pulse signal 200. For example, the at least one processor 110 may transmit the HSS packet 210-5 to the display driving circuitry 131 within the reference time period 240 being from a seventh time 230-7 at which the pulse signal 200 is transmitted to the display driving circuitry 131 according to the resumed transmission of the pulse signal 200 and transmit, in response to transmitting the HSS packet 210-5, the fifth portion 220-5 of the image to the display driving circuitry 131.

For example, the display driving circuitry 131 may defer the scan for the display on the fifth horizontal line, based on not receiving the pulse signal 200 from the at least one processor 110. As a non-limiting example, the display driving circuitry 131 may defer the scan by refraining from a count for the fifth horizontal line, based on not receiving the pulse signal 200 from the at least one processor 110. For example, the display driving circuitry 131 may defer the scan until receiving an HSS packet (e.g., the HSS packet 210-5) from the at least one processor 110 within the reference time period 240 being from a time (e.g., the seventh time 230-7) at which the pulse signal 200 is received from the at least one processor 110 according to the resumed transmission.

For example, the display driving circuitry 131 may perform the scan based on the HSS packet 210-5 received within the reference time period 240 being from the seventh time 230-7 at which the pulse signal 200 is received from the at least one processor 110 according to the resumed transmission. For example, the display driving circuitry 131 may perform the scan by counting for the fifth horizontal line based on the HSS packet 210-5 received within the reference time period 240 being from the seventh time 230-7 at which the pulse signal 200 is received from the at least one processor 110 according to the resumed transmission.

As described above, the electronic device 100 may process a lag of image transmission from the at least one processor 110 to the display driving circuitry 131, by determining whether to perform a scan for display on a horizontal line of the active area of the display panel 132 by using the pulse signal 200 and an HSS packet.

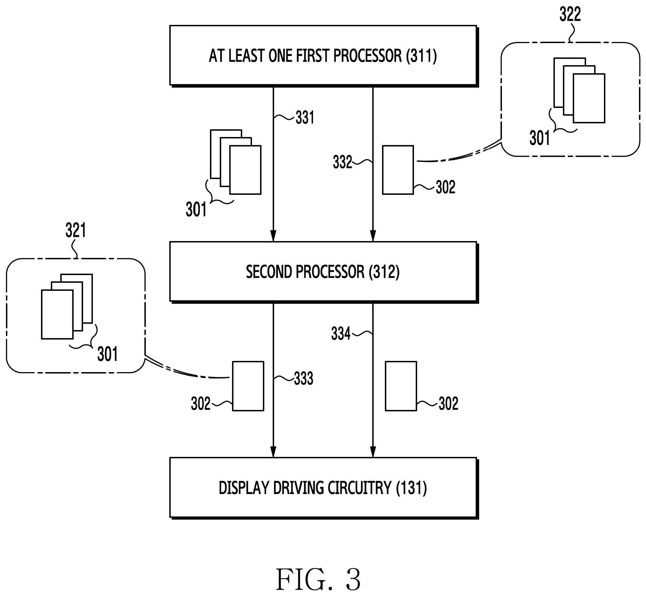

Referring again to FIG. 1, as a non-limiting example, a lag of the image transmission may be caused due to an underrun of the DPU 112. For example, the at least one processor 110 may reduce the lag of the image transmission by executing a portion of operations executed by using the DPU 112 by using at least one component (e.g., the CPU 111 and/or the GPU) of the at least one processor 110 different from the DPU 112. This operation is exemplified in the description of FIG. 3.

FIG. 3 illustrates an exemplary method for adaptively synthesizing multiple images for an image to be displayed on a display panel to reduce a lag of image transmission.

Referring to FIG. 3, at least one first processor 311 may include the CPU 111 exemplified in the description of FIG. 1 and/or the GPU exemplified in the description of FIG. 1. A second processor 312 may include the DPU 112 exemplified in the description of FIG. 1. As a non-limiting example, the at least one first processor 311 and the second processor 312 may be included in a processor assembly.

For example, the at least one first processor 311 may generate (or obtain) multiple images 301 for an image 302 to be displayed on the display panel 132. For example, the multiple images 301 may be used for multiple layers of the image 302 overlapping each other.

For example, the at least one first processor 311 may identify (or estimate) (or determine) (or monitor) (or check) (or recognize) a load of the second processor 312. For example, the at least one first processor 311 may identify the load of the second processor 312 to reduce occurrence of an underrun of the second processor 312. As a non-limiting example, identifying the load may be executed by using the first program 191 exemplified in the description of FIG. 1.

For example, the at least one first processor 311 may compare the load with a threshold load. For example, the comparison between the load and the threshold load may be executed to determine whether to transmit the multiple images 301 to the second processor 312. For example, the load greater than the threshold load may indicate that a probability of occurrence of an underrun of the second processor 312 is relatively high, and the load smaller than the threshold load (or the load smaller than or equal to the threshold load) may indicate that a probability of occurrence of an underrun of the second processor 312 is relatively low. As a non-limiting example, the comparison between the load and the threshold load may be executed by using the first program 191.

For example, the at least one first processor 311 may perform providing 331 the multiple images 301 to the second processor 312, based on the load smaller than the threshold load. As a non-limiting example, the at least one first processor 311 may, in response to the load smaller than the threshold load, perform providing 331 the multiple images 301 to the second processor 312 by storing the multiple images 301 in memory 120 (e.g., a dynamic random access memory (DRAM)). For example, the second processor 312 may generate an image 302 in which the multiple images 301 are synthesized, based on obtaining the multiple images 301 from the memory 120. For example, the image 302 may be generated by using the multiple images 301, as in a state 321. For example, the second processor 312 may perform transmitting 333 the image 302 to the display driving circuitry 131.

For example, the at least one first processor 311 may generate an image 302 in which the multiple images 301 are synthesized, based on the load greater than the threshold load. For example, the image 302 may be generated by using the multiple images 301, as in a state 322. For example, the at least one first processor 311 may perform synthesis of the multiple images 301 instead of the second processor 312, based on the load greater than the threshold load. For example, the at least one first processor 311 may perform providing 332, to the second processor 312, the image 302 in which the multiple images 301 are synthesized. As a non-limiting example, the at least one first processor 311 may, by storing the image 302 in which the multiple images 301 are synthesized in the memory 120, perform providing 332, to the second processor 312, the image 302. For example, the second processor 312 may perform transmitting 334, to the display driving circuitry 131, the image 302, based on obtaining the image 302 from the memory 120.

As a non-limiting example, the at least one first processor 311 may, based on the load greater than the threshold load, change a speed of a clock for the second processor 312 from a first speed to a second speed higher than the first speed, and perform providing 331, to the second processor 312, the multiple images 301. For example, the second processor 312 may, according to the second speed, perform obtaining the multiple images 301, generating the image 302 in which the multiple images 301 are synthesized, and transmitting 333 the image 302 to the display driving circuitry 131.

As a non-limiting example, the at least one first processor 311 may reduce a speed of the interface 140 based on the load greater than the threshold load. For example, the at least one first processor 311 may reduce occurrence of an underrun of the second processor 312 by reducing the speed of the interface 140 to increase a bandwidth for a horizontal line, based on the load greater than the threshold load.

As described above, the electronic device 100 may reduce occurrence of an underrun of the second processor 312 by monitoring a load of the second processor 312 (e.g., the DPU 112). Occurrence of a lag of the image transmission to the display driving circuitry 131 may be reduced according to reducing the occurrence of the underrun of the second processor 312.

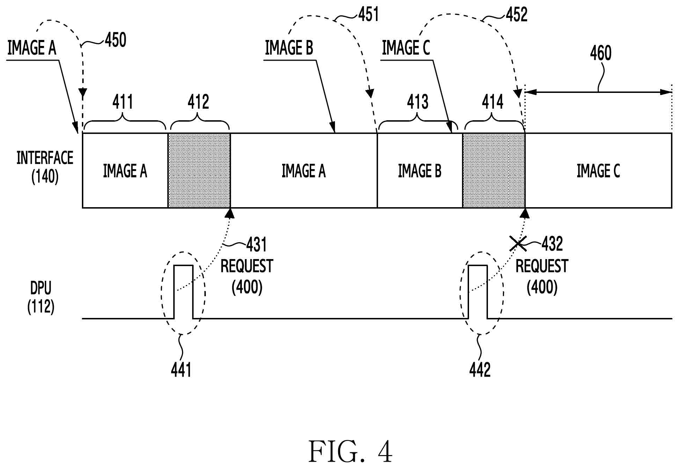

Referring again to FIG. 1, as a non-limiting example, the DPU 112 (or the display driving circuitry 131) may identify (or monitor) (or detect) (or check) occurrence of a lag of the image transmission (or occurrence of an underrun of the DPU 112). For example, the DPU 112 (or the display driving circuitry 131) may, based on (or in response to) the occurrence of the lag of the image transmission, transmit, to the CPU 111 (or the DPU 112), a request for retransmission (or repeated transmission) of an image associated with the lag of the image transmission. For example, the electronic device 100 may process the lag of the image transmission through the request. This operation is exemplified in the description of FIG. 4.

FIG. 4 illustrates an exemplary method for processing a lag of image transmission by using a retransmission request.

Referring to FIG. 4, the DPU 112 may, through image transmission from the at least one processor 110 (or the DPU 112) to the display driving circuitry 131, transmit, to the display driving circuitry 131, an image A to be displayed on the display panel 132 as indicated by an arrow 450. As a non-limiting example, unlike a portion 411 of the image A transmitted to the display driving circuitry 131, another portion 412 (or a remaining portion 412) of the image A may not be transmitted to the display driving circuitry 131. For example, the another portion 412 of the image A may not be transmitted to the display driving circuitry 131 within a time interval of a vertical synchronization signal targeted for the image A due to an underrun of the DPU 112. For example, a lag of the image transmission for the image A may be caused due to the underrun of the DPU 112.

For example, the DPU 112 (or the display driving circuitry 131) (or a tiny core in the CPU 111) (e.g., used for detecting an underrun of the DPU 112 and used for a state for a lower power state of the CPU 111) may detect (or identify) (or recognize) (or monitor) (or check) the underrun of the DPU 112 (or the lag of the image transmission), as indicated by a state 441. For example, the DPU 112 (or the display driving circuitry 131) may, in response to the detection, transmit, to the CPU 111 (or the at least one processor 110), a request 400 for repeated transmission of the image A.

For example, the DPU 112 may perform the repeated transmission of the image A obtained from the CPU 111 (or the memory 120), in response to the request 400, as indicated by an arrow 431. For example, the tiny core may cause the DPU 112 to perform the repeated transmission of the image A, in response to the request 400 caused in response to the detection. As a non-limiting example, unlike the tiny core used for the repeated transmission of the image A, at least a portion of one or more cores in the CPU 111 distinguished from the tiny core may maintain a sleep state or an idle state.

As a non-limiting example, an image B next to the image A may be generated while the repeated transmission of the image A is performed (or while repeated display of the image A is performed on the display panel 132).

For example, the DPU 112 may, through the image transmission, transmit, to the display driving circuitry 131, the image B to be displayed on the display panel 132, as indicated by an arrow 451. As a non-limiting example, unlike a portion 413 of the image B transmitted to the display driving circuitry 131, another portion 414 (or a remaining portion 414) of the image B may not be transmitted to the display driving circuitry 131. For example, the another portion 414 of the image B may not be transmitted to the display driving circuitry 131 within a time interval of a vertical synchronization signal targeted for the image B, due to an underrun of the DPU 112. For example, a lag of the image transmission for the image B may be caused due to the underrun of the DPU 112.

For example, the DPU 112 (or the display driving circuitry 131) may detect the underrun of the DPU 112 (or the lag of the image transmission), as indicated by a state 442. For example, the DPU 112 (or the display driving circuitry 131) may, in response to the detection, transmit, to the CPU 111 (or the at least one processor 110), the request 400 for repeated transmission of the image B.

For example, an image C next to the image B may be generated while transmission of the image B (or abnormal transmission of the image B) is performed (or while display of the image B (abnormal display of the image B) is performed on the display panel 132).

For example, a time interval 460 may be usable for the repeated display of the image B according to the request 400 and display of the image C generated while the transmission of the image B is performed. For example, since the repeated display of the image B is for the another portion 414 of the image B not transmitted to the display driving circuitry 131, a priority of the display of the image C may be higher than a priority of the repeated display of the image B. For example, since abnormal display caused on the display panel 132 due to the another portion 414 of the image B not transmitted to the display driving circuitry 131 is compensated according to the display of the image C, the display of the image C among the display of the image C and the repeated display of the image B according to the request 400 may be performed within the time interval 460.

For example, the DPU 112 may transmit, to the display driving circuitry 131, an image C to be displayed on the display panel 132, as indicated by an arrow 452. For example, the DPU 112 may refrain from repeated transmission of the image B for the repeated display of the image B within the time interval 460, as indicated by an arrow 432.

FIG. 4 illustrates an example in which the repeated transmission of the image A is executed according to the underrun of the DPU 112, but this is merely exemplary. For example, the repeated transmission of the image A may be replaced with transmission of a pre-stored image (e.g., a black image). For example, the DPU 112 (or the display driving circuitry 131) (or the tiny core) may detect (or identify) (or recognize) (or monitor) (or check) the underrun of the DPU 112 (or the lag of the image transmission), as indicated by the state 441. For example, the DPU 112 may perform transmission of the pre-stored image, in response to the detection. For example, the tiny core may cause the DPU 112 to perform transmission of the pre-stored image, in response to the detection. As a non-limiting example, unlike the tiny core used for the repeated transmission of the image A, at least a portion of one or more cores in the CPU 111 distinguished from the tiny core may maintain a sleep state or an idle state.

As described above, the electronic device 100 may, by using the request 400 causing repeated transmission of an image, process a lag of the image transmission to the display driving circuitry 131.

Referring again to FIG. 1, as a non-limiting example, the display driving circuitry 131 may include the GRAM for the second mode. For example, the display driving circuitry 131 may process a lag of the image transmission by using the GRAM. This operation is exemplified in the description of FIG. 5.

FIG. 5 illustrates an exemplary method for processing a lag of image transmission by using a graphic random access memory (GRAM).

Referring to FIG. 5, the active area of the display panel 132 may include the horizontal lines (or the partial areas of the active area corresponding to the horizontal lines). For example, the image may include portions of the image to be respectively displayed on the horizontal lines (or the partial areas). For example, the portions of the image may be sequentially transmitted to the display driving circuitry 131 through image transmission from the at least one processor 110 to the display driving circuitry 131.

For example, the display driving circuitry 131 may defer a scan of the portions of the image sequentially received from the at least one processor 110 within a reference time period being from a start time of the image transmission for display of the image. For example, the display driving circuitry 131 may store, in the GRAM, the portions of the image sequentially received from the at least one processor 110 within the reference time period. For example, the display driving circuitry 131 may start (or initiate) a scan for displaying the image on the display panel 132, on a condition that the reference time period elapses.

For example, the display driving circuitry 131 may defer scanning sequentially the portions of the image received from the at least one processor 110 and store, in the GRAM, the portions of the image received from the at least one processor 110, until the reference time period elapses. For example, the display driving circuitry 131 may sequentially scan the portions of the image stored in the GRAM, based on identifying that the reference time period elapses.

For example, the display driving circuitry 131 may sequentially receive, from the at least one processor 110 through the image transmission, a first portion 500-1 of the image, a second portion 500-2 of the image, a third portion 500-3 of the image, a fourth portion 500-4 of the image, ..., and a Kth portion 500-K of the image. For example, the display driving circuitry 131 may sequentially store, in the GRAM, the first portion 500-1 of the image to the Kth portion 500-K of the image sequentially received from the at least one processor 110, as indicated by a state 510.

For example, the display driving circuitry 131 may, based on elapse of the reference time period from a start time of reception of the first portion 500-1 of the image, scan the first portion 500-1 of the image in the GRAM, as indicated by an arrow 511. The first portion 500-1 of the image may be removed (or discarded) from the GRAM according to the scan of the first portion 500-1 of the image.

For example, the display driving circuitry 131 may store, in the GRAM, a K+1th portion 500-(K+1) of the image received from the at least one processor 110. For example, a state of the GRAM may be changed from the state 510 to a state 520, according to removing the first portion 500-1 of the image from the GRAM and storing the K+1th portion 500-(K+1) of the image in the GRAM.

For example, the display driving circuitry 131 may scan the second portion 500-2 of the image in the GRAM, as indicated by an arrow 521. The second portion 500-2 of the image may be removed from the GRAM, according to the scan of the second portion 500-2 of the image.

For example, after the K+1th portion 500-(K+1) of the image is transmitted to the display driving circuitry 131 through the image transmission, an underrun of the at least one processor 110 may be caused. For example, a lag of the image transmission may be caused due to the underrun of the at least one processor 110. For example, transmission of a K+2th portion 500-(K+2) of the image may not be executed at a targeted time due to the underrun of the at least one processor 110.

For example, the state of the GRAM may be changed from the state 520 to a state 530 according to the second portion 500-2 of the image removed from the GRAM and transmission of the K+2th portion 500-(K+2) of the image not executed due to the underrun of the at least one processor 110.

For example, the display driving circuitry 131 may scan the third portion 500-3 of the image in the GRAM, as indicated by an arrow 531. The third portion 500-3 of the image may be removed from the GRAM, according to the scan of the third portion 500-3 of the image.

For example, the underrun of the at least one processor 110 may be maintained. For example, the transmission of the K+2th portion 500-(K+2) of the image may not be executed at a targeted time due to the underrun of the at least one processor 110.

For example, the state of the GRAM may be changed from the state 530 to a state 540 according to transmission of the third portion 500-3 of the image removed from the GRAM and the K+2th portion 500-(K+2) of the image not executed due to the underrun of the at least one processor 110.

For example, the display driving circuitry 131 may scan the fourth portion 500-4 of the image in the GRAM, as indicated by an arrow 541. The fourth portion 500-4 of the image may be removed from the GRAM according to the scan of the fourth portion 500-4 of the image.

For example, the underrun of the at least one processor 110 may be released. For example, the display driving circuitry 131 may store, in the GRAM, the K+2th portion 500-(K+2) of the image received from the at least one processor 110. For example, a state of the GRAM may be changed from the state 540 to a state 550 according to removing the fourth portion 500-4 of the image from the GRAM and storing the K+2th portion 500-(K+2) of the image in the GRAM.

As described above, the electronic device 100 may maintain quality of an image displayed on the display panel 132 despite the underrun of the at least one processor 110, by performing a delayed scan of the display driving circuitry 131 by using the GRAM.

The operations exemplified above may be executed by an electronic device 601 exemplified in the following description.

FIG. 6 is a block diagram illustrating an electronic device 601 in a network environment 600 according to various embodiments. Referring to FIG. 6, the electronic device 601 in the network environment 600 may communicate with an electronic device 602 via a first network 698 (e.g., a short-range wireless communication network), or at least one of an electronic device 604 or a server 608 via a second network 699 (e.g., a long-range wireless communication network). According to an embodiment, the electronic device 601 may communicate with the electronic device 604 via the server 608. According to an embodiment, the electronic device 601 may include a processor 620, memory 630, an input module 650, a sound output module 655, a display module 660, an audio module 670, a sensor module 676, an interface 677, a connecting terminal 678, a haptic module 679, a camera module 680, a power management module 688, a battery 689, a communication module 690, a subscriber identification module (SIM) 696, or an antenna module 697. In some embodiments, at least one of the components (e.g., the connecting terminal 678) may be omitted from the electronic device 601, or one or more other components may be added in the electronic device 601. In some embodiments, some of the components (e.g., the sensor module 676, the camera module 680, or the antenna module 697) may be implemented as a single component (e.g., the display module 660).

The processor 620 may execute, for example, software (e.g., a program 640) to control at least one other component (e.g., a hardware or software component) of the electronic device 601 coupled with the processor 620, and may perform various data processing or computation. According to an embodiment, as at least part of the data processing or computation, the processor 620 may store a command or data received from another component (e.g., the sensor module 676 or the communication module 690) in volatile memory 632, process the command or the data stored in the volatile memory 632, and store resulting data in non-volatile memory 634. According to an embodiment, the processor 620 may include a main processor 621 (e.g., a central processing unit (CPU) or an application processor (AP)), or an auxiliary processor 623 (e.g., a graphics processing unit (GPU), a neural processing unit (NPU), an image signal processor (ISP), a sensor hub processor, or a communication processor (CP)) that is operable independently from, or in conjunction with, the main processor 621. For example, when the electronic device 601 includes the main processor 621 and the auxiliary processor 623, the auxiliary processor 623 may be adapted to consume less power than the main processor 621, or to be specific to a specified function. The auxiliary processor 623 may be implemented as separate from, or as part of the main processor 621.

The auxiliary processor 623 may control at least some of functions or states related to at least one component (e.g., the display module 660, the sensor module 676, or the communication module 690) among the components of the electronic device 601, instead of the main processor 621 while the main processor 621 is in an inactive (e.g., sleep) state, or together with the main processor 621 while the main processor 621 is in an active state (e.g., executing an application). According to an embodiment, the auxiliary processor 623 (e.g., an image signal processor or a communication processor) may be implemented as part of another component (e.g., the camera module 680 or the communication module 690) functionally related to the auxiliary processor 623. According to an embodiment, the auxiliary processor 623 (e.g., the neural processing unit) may include a hardware structure specified for artificial intelligence model processing. An artificial intelligence model may be generated by machine learning. Such learning may be performed, e.g., by the electronic device 601 where the artificial intelligence is performed or via a separate server (e.g., the server 608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 630 may store various data used by at least one component (e.g., the processor 620 or the sensor module 676) of the electronic device 601. The various data may include, for example, software (e.g., the program 640) and input data or output data for a command related thereto. The memory 630 may include the volatile memory 632 or the non-volatile memory 634.

The program 640 may be stored in the memory 630 as software, and may include, for example, an operating system (OS) 642, middleware 644, or an application 646.

The input module 650 may receive a command or data to be used by another component (e.g., the processor 620) of the electronic device 601, from the outside (e.g., a user) of the electronic device 601. The input module 650 may include, for example, a microphone, a mouse, a keyboard, a key (e.g., a button), or a digital pen (e.g., a stylus pen).

The sound output module 655 may output sound signals to the outside of the electronic device 601. The sound output module 655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 660 may visually provide information to the outside (e.g., a user) of the electronic device 601. The display module 660 may include, for example, a display, a hologram device, or a projector and control circuitry to control a corresponding one of the display, hologram device, and projector. According to an embodiment, the display module 660 may include a touch sensor adapted to detect a touch, or a pressure sensor adapted to measure the intensity of force incurred by the touch.

The audio module 670 may convert a sound into an electrical signal and vice versa. According to an embodiment, the audio module 670 may obtain the sound via the input module 650, or output the sound via the sound output module 655 or a headphone of an external electronic device (e.g., an electronic device 602) directly (e.g., wiredly) or wirelessly coupled with the electronic device 601.

The sensor module 676 may detect an operational state (e.g., power or temperature) of the electronic device 601 or an environmental state (e.g., a state of a user) external to the electronic device 601, and then generate an electrical signal or data value corresponding to the detected state. According to an embodiment, the sensor module 676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 677 may support one or more specified protocols to be used for the electronic device 601 to be coupled with the external electronic device (e.g., the electronic device 602) directly (e.g., wiredly) or wirelessly. According to an embodiment, the interface 677 may include, for example, a high definition multimedia interface (HDMI), a universal serial bus (USB) interface, a secure digital (SD) card interface, or an audio interface.

A connecting terminal 678 may include a connector via which the electronic device 601 may be physically connected with the external electronic device (e.g., the electronic device 602). According to an embodiment, the connecting terminal 678 may include, for example, an HDMI connector, a USB connector, an SD card connector, or an audio connector (e.g., a headphone connector).

The haptic module 679 may convert an electrical signal into a mechanical stimulus (e.g., a vibration or a movement) or electrical stimulus which may be recognized by a user via his tactile sensation or kinesthetic sensation. According to an embodiment, the haptic module 679 may include, for example, a motor, a piezoelectric element, or an electric stimulator.

The camera module 680 may capture a still image or moving images. According to an embodiment, the camera module 680 may include one or more lenses, image sensors, image signal processors, or flashes.

The power management module 688 may manage power supplied to the electronic device 601. According to an embodiment, the power management module 688 may be implemented as at least part of, for example, a power management integrated circuit (PMIC).

The battery 689 may supply power to at least one component of the electronic device 601. According to an embodiment, the battery 689 may include, for example, a primary cell which is not rechargeable, a secondary cell which is rechargeable, or a fuel cell.

The communication module 690 may support establishing a direct (e.g., wired) communication channel or a wireless communication channel between the electronic device 601 and the external electronic device (e.g., the electronic device 602, the electronic device 604, or the server 608) and performing communication via the established communication channel. The communication module 690 may include one or more communication processors that are operable independently from the processor 620 (e.g., the application processor (AP)) and supports a direct (e.g., wired) communication or a wireless communication. According to an embodiment, the communication module 690 may include a wireless communication module 692 (e.g., a cellular communication module, a short-range wireless communication module, or a global navigation satellite system (GNSS) communication module) or a wired communication module 694 (e.g., a local area network (LAN) communication module or a power line communication (PLC) module). A corresponding one of these communication modules may communicate with the external electronic device via the first network 698 (e.g., a short-range communication network, such as Bluetooth^{™}, wireless-fidelity (Wi-Fi) direct, or infrared data association (IrDA)) or the second network 699 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 692 may identify and authenticate the electronic device 601 in a communication network, such as the first network 698 or the second network 699, using subscriber information (e.g., international mobile subscriber identity (IMSI)) stored in the subscriber identification module 696.

The wireless communication module 692 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 692 may support a high-frequency band (e.g., the mmWave band) to achieve, e.g., a high data transmission rate. The wireless communication module 692 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 692 may support various requirements specified in the electronic device 601, an external electronic device (e.g., the electronic device 604), or a network system (e.g., the second network 699). According to an embodiment, the wireless communication module 692 may support a peak data rate (e.g., 20Gbps or more) for implementing eMBB, loss coverage (e.g., 664dB or less) for implementing mMTC, or U-plane latency (e.g., 0.5ms or less for each of downlink (DL) and uplink (UL), or a round trip of 6ms or less) for implementing URLLC.

The antenna module 697 may transmit or receive a signal or power to or from the outside (e.g., the external electronic device) of the electronic device 601. According to an embodiment, the antenna module 697 may include an antenna including a radiating element composed of a conductive material or a conductive pattern formed in or on a substrate (e.g., a printed circuit board (PCB)). According to an embodiment, the antenna module 697 may include a plurality of antennas (e.g., array antennas). In such a case, at least one antenna appropriate for a communication scheme used in the communication network, such as the first network 698 or the second network 699, may be selected, for example, by the communication module 690 (e.g., the wireless communication module 692) from the plurality of antennas. The signal or the power may then be transmitted or received between the communication module 690 and the external electronic device via the selected at least one antenna. According to an embodiment, another component (e.g., a radio frequency integrated circuit (RFIC)) other than the radiating element may be additionally formed as part of the antenna module 697.

According to various embodiments, the antenna module 697 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 601 and the external electronic device 604 via the server 608 coupled with the second network 699. Each of the electronic devices 602 or 604 may be a device of a same type as, or a different type, from the electronic device 601. According to an embodiment, all or some of operations to be executed at the electronic device 601 may be executed at one or more of the external electronic devices 602, 604, or 608. For example, if the electronic device 601 should perform a function or a service automatically, or in response to a request from a user or another device, the electronic device 601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 601. The electronic device 601 may provide the outcome, with or without further processing of the outcome, as at least part of a reply to the request. To that end, a cloud computing, distributed computing, mobile edge computing (MEC), or client-server computing technology may be used, for example. The electronic device 601 may provide ultra low-latency services using, e.g., distributed computing or mobile edge computing. In another embodiment, the external electronic device 604 may include an internet-of-things (IoT) device. The server 608 may be an intelligent server using machine learning and/or a neural network. According to an embodiment, the external electronic device 604 or the server 608 may be included in the second network 699. The electronic device 601 may be applied to intelligent services (e.g., smart home, smart city, smart car, or healthcare) based on 5G communication technology or IoT-related technology.

FIG. 7 is a block diagram 700 illustrating the display module 660 according to various embodiments. Referring to FIG. 7, the display module 660 may include a display 710 and a display driver integrated circuit (DDI) 730 to control the display 710. The DDI 730 may include an interface module 731, memory 733 (e.g., buffer memory), an image processing module 735, or a mapping module 737. The DDI 730 may receive image information that contains image data or an image control signal corresponding to a command to control the image data from another component of the electronic device 601 via the interface module 731. For example, according to an embodiment, the image information may be received from the processor 620 (e.g., the main processor 621 (e.g., an application processor)) or the auxiliary processor 623 (e.g., a graphics processing unit) operated independently from the function of the main processor 621. The DDI 730 may communicate, for example, with touch circuitry 750 or the sensor module 676 via the interface module 731. The DDI 730 may also store at least part of the received image information in the memory 733, for example, on a frame by frame basis. The image processing module 735 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 710. The mapping module 737 may generate a voltage value or a current value corresponding to the image data pre-processed or post-processed by the image processing module 735. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 710 may be driven, for example, based at least in part on the voltage value or the current value such that visual information (e.g., a text, an image, or an icon) corresponding to the image data may be displayed via the display 710.

According to an embodiment, the display module 660 may further include the touch circuitry 750. The touch circuitry 750 may include a touch sensor 751 and a touch sensor IC 753 to control the touch sensor 751. The touch sensor IC 753 may control the touch sensor 751 to sense a touch input or a hovering input with respect to a certain position on the display 710. To achieve this, for example, the touch sensor 751 may detect (e.g., measure) a change in a signal (e.g., a voltage, a quantity of light, a resistance, or a quantity of one or more electric charges) corresponding to the certain position on the display 710. The touch circuitry 750 may provide input information (e.g., a position, an area, a pressure, or a time) indicative of the touch input or the hovering input detected via the touch sensor 751 to the processor 620. According to an embodiment, at least part (e.g., the touch sensor IC 753) of the touch circuitry 750 may be formed as part of the display 710 or the DDI 730, or as part of another component (e.g., the auxiliary processor 623) disposed outside the display module 660.

According to an embodiment, the display module 660 may further include at least one sensor (e.g., a fingerprint sensor, an iris sensor, a pressure sensor, or an illuminance sensor) of the sensor module 676 or a control circuit for the at least one sensor. In such a case, the at least one sensor or the control circuit for the at least one sensor may be embedded in one portion of a component (e.g., the display 710, the DDI 730, or the touch circuitry 750)) of the display module 660. For example, when the sensor module 676 embedded in the display module 660 includes a biometric sensor (e.g., a fingerprint sensor), the biometric sensor may obtain biometric information (e.g., a fingerprint image) corresponding to a touch input received via a portion of the display 710. As another example, when the sensor module 676 embedded in the display module 660 includes a pressure sensor, the pressure sensor may obtain pressure information corresponding to a touch input received via a partial or whole area of the display 710. According to an embodiment, the touch sensor 751 or the sensor module 676 may be disposed between pixels in a pixel layer of the display 710, or over or under the pixel layer.

The technical problems to be achieved in this document are not limited to those described above, and other technical problems not mentioned herein will be clearly understood by those having ordinary knowledge in the art to which the present disclosure belongs.

As described above, an electronic device (e.g., the electronic device 100) may include at least one processor (e.g., the at least one processor 110) including processing circuitry and a display (e.g., the display 130) including display driving circuitry (e.g., the display driving circuitry 131) and a display panel (e.g., the display panel 132). The display driving circuitry may be configured to receive, from the at least one processor, a first portion of an image to be displayed on a first horizontal line of an active area of the display panel; receive, after the first portion of the image is received, a pulse signal transmitted from the at least one processor to synchronize time in the display driving circuitry for display on the display panel with time in the at least one processor for display on the display panel; identify whether a horizontal synchronization signal (HSS) packet for a second portion of the image to be displayed on a second horizontal line of the active area next to the first horizontal line is received from the at least one processor within a reference time period being from a time at which the pulse signal is received; perform a scan for display on the second horizontal line based on the HSS packet received within the reference time period; and defer the scan based on the HSS packet not received within the reference time period.

The display driving circuitry may be configured to defer the scan until receiving the HSS packet from the at least one processor within the reference time period being from another time at which the pulse signal is received.

The display driving circuitry may be configured to perform the scan by performing a count for the second horizontal line based on the HSS packet received within the reference time period and defer the scan by refraining from the count based on the HSS packet not received within the reference time period.

The display driving circuitry may be configured to perform the scan by using the second portion of the image received from the at least one processor after the HSS packet is received within the reference time period.

The electronic device may include a first interface (e.g., the interface 140) connecting the at least one processor to the display driving circuitry and a second interface, connecting the at least one processor to the display driving circuitry, separated from the first interface. The first interface may be used for reception of the first portion of the image, reception of the second portion of the image, and reception of the HSS packet, and the second interface may be used for reception of the pulse signal.

A time length of an active portion of a vertical synchronization signal for display of the image when the HSS packet is received within the reference time period may be shorter than the time length when the HSS packet is not received within the reference time period.

The at least one processor may include a central processing unit (CPU) (e.g., the CPU 111) including processing circuitry and a display processing unit (DPU) (e.g., the DPU 112) including processing circuitry. The HSS packet not received within the reference time period may be caused according to an underrun of the DPU.

A time changing a width of the pulse signal to indicate a start timing of a vertical synchronization signal for an image to be displayed after the image may be adjusted by the at least one processor according to deferring the scan.

The first portion of the image, the HSS packet, and the second portion of the image may be transmitted from the at least one processor to the display driving circuitry, in accordance with a video mode of mobile industry processor interface (MIPI) display serial interface (DSI).

The first portion of the image, the HSS packet, and the second portion of the image may be transmitted from the at least one processor to the display driving circuitry, in accordance with a video hybrid mode of mobile industry processor interface (MIPI) display serial interface (DSI).

The first portion of the image, the HSS packet, and the second portion of the image may be transmitted from the at least one processor to the display driving circuitry, in accordance with an adaptive refresh panel (ARP) of mobile industry processor interface (MIPI) display serial interface (DSI).

As described above, an electronic device (e.g., the electronic device 100) may include a display (e.g., the display 130) including display driving circuitry (e.g., the display driving circuitry 131) and a display panel (e.g., the display panel 132) and at least one processor (e.g., the at least one processor 110) including processing circuitry. The at least one processor may be individually or collectively configured to transmit, to the display driving circuitry, a first portion of an image to be displayed on a first horizontal line of an active area of the display panel; after transmitting the first portion of the image, recognize that transmitting, to the display driving circuitry, a second portion of the image to be displayed on a second horizontal line of the active area next to the first horizontal line is not ready; in response to the recognition, cease transmitting, to the display driving circuitry, a pulse signal to synchronize time in the at least one processor for display on the display panel with time in the display driving circuitry for display on the display panel; based on recognizing that transmitting the second portion of the image to the display driving circuitry is ready, resume transmission of the pulse signal; and transmit, to the display driving circuitry, the second portion of the image according to the resumed transmission of the pulse signal.

The display driving circuitry may be configured to defer a scan for display on the second horizontal line based on not receiving the pulse signal from the at least one processor.

The display driving circuitry may be configured to defer the scan until receiving the HSS packet from the at least one processor within a reference time period being from a time at which the pulse signal is received from the at least one processor according to the resumed transmission of the pulse signal.

The display driving circuitry may be configured to defer the scan by refraining from a count for the second horizontal line based on not receiving the pulse signal from the at least one processor.

The at least one processor may be individually or collectively configured to, based on recognizing that transmitting the second portion of the image to the display driving circuitry is ready, resume the transmission of the pulse signal; transmit the HSS packet to the display driving circuitry within a reference time period being from a time at which the pulse signal is transmitted to the display driving circuitry according to the resumed transmission of the pulse signal; and in response to transmitting the HSS packet, transmit the second portion of the image to the display driving circuitry.

The at least one processor may include a central processing unit (CPU) (e.g., the CPU 111) including processing circuitry and a display processing unit (DPU) (e.g., the DPU 112) including processing circuitry. That transmitting the second portion of the image to the display driving circuitry is not ready may be caused according to an underrun of the DPU.

As described above, an electronic device (e.g., the electronic device 100) may include a processor assembly including at least one first processor (e.g., the at least one first processor 311) including processing circuitry and a second processor (e.g., the second processor 312) including processing circuitry and a display (e.g., the display 130) including display driving circuitry (e.g., the display driving circuitry 131) and a display panel (e.g., the display panel 132). The at least one first processor may be configured to generate multiple images for an image to be displayed on the display panel and identify a load of the second processor. The at least one first processor may be configured to provide the multiple images to the second processor based on the load smaller than a threshold load. The second processor may be configured to generate the image in which the multiple images are synthesized and transmit, to the display driving circuitry, the image generated by the second processor. The at least one first processor may be configured to generate the image in which the multiple images are synthesized and provide, to the second processor, the image generated by the at least one first processor based on the load greater than the threshold load. The second processor may be configured to transmit, to the display driving circuitry, the image.

The at least one first processor may be configured to identify, by using the at least one first processor, whether the load is greater than the threshold load.

The electronic device may include memory (e.g., the memory 120). The memory may store a program included in a hardware abstraction layer (HAL) for control of the display. The program may include instructions executable by the at least one first processor to identify the load and identify whether the load is greater than the threshold load.

The effects that can be obtained from the present disclosure are not limited to those described above, and any other effects not mentioned herein will be clearly understood by those having ordinary knowledge in the art to which the present disclosure belongs, from the following description.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device (or processing circuitry) may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

A method according to an embodiment may be implemented in the form of program instruction capable of being executed through various computer means and recorded in a computer-readable medium. In this case, the medium may continuously store a program executable by a computer or may temporarily store the program for execution or download. In addition, the medium may be various recording means or storage means in the form in which a single hardware or several hardware are combined, and is not limited to a medium directly connected to any computer system and may be distributed over a network.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 640) including one or more instructions that are stored in a storage medium (e.g., internal memory 636 or external memory 638) that is readable by a machine (e.g., the electronic device 601). For example, a processor (e.g., the processor 620) of the machine (e.g., the electronic device 601) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{TM}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
at least one processor comprising processing circuitry; and
a display comprising display driving circuitry and a display panel,
wherein the display driving circuitry is configured to:
receive, from the at least one processor, a first portion of an image to be displayed on a first horizontal line of an active area of the display panel;
after the first portion of the image is received, receive a pulse signal transmitted from the at least one processor to synchronize time in the display driving circuitry for display on the display panel with time in the at least one processor for display on the display panel;
identify whether a horizontal synchronization signal (HSS) packet for a second portion of the image to be displayed on a second horizontal line of the active area next to the first horizontal line is received from the at least one processor within a reference time period, the reference time period being from time receiving the pulse signal;
based on the HSS packet received within the reference time period, perform a scan for display on the second horizontal line; and
based on the HSS packet not received within the reference time period, defer the scan.

2. The electronic device of claim 1, wherein the display driving circuitry is configured to defer the scan until receiving the HSS packet from the at least one processor within the reference time period being from another time receiving the pulse signal.

3. The electronic device of claim 1, wherein the display driving circuitry is configured to:
perform, by performing a count for the second horizontal line based on the HSS packet received within the reference time period, the scan; and
defer, by refraining from the count based on the HSS packet not received within the reference time period, the scan.

4. The electronic device of claim 1, wherein the display driving circuitry is configured to:
perform, using the second portion of the image received from the at least one processor after the HSS packet is received within the reference time period, the scan.

5. The electronic device of claim 1, further comprising:
a first interface connecting the at least one processor to the display driving circuitry; and
a second interface, connecting the at least one processor to the display driving circuitry, separated from the first interface,
wherein the first interface is used for reception of the first portion of the image, reception of the second portion of the image, and reception of the HSS packet, and
wherein the second interface is used for reception of the pulse signal.

6. The electronic device of claim 1, wherein a time length of an active portion of a vertical synchronization signal for display of the image when the HSS packet is received within the reference time period is shorter than a time length when the HSS packet is not received within the reference time period.

7. The electronic device of claim 1, wherein the at least one processor includes:
a central processing unit (CPU) comprising processing circuitry; and
a display processing unit (DPU) comprising processing circuitry,
wherein the HSS packet not received within the reference time period is caused according to an underrun of the DPU.

8. The electronic device of claim 1, wherein time changing a width of the pulse signal to indicate a start timing of a vertical synchronization signal for an image to be displayed after the image is adjusted by the at least one processor in accordance with deferring the scan.

9. The electronic device of claim 1, wherein the first portion of the image, the HSS packet, and the second portion of the image are transmitted from the at least one processor to the display driving circuitry, in accordance with a video mode of mobile industry processor interface (MIPI) display serial interface (DSI).

10. The electronic device of claim 1, wherein the first portion of the image, the HSS packet, and the second portion of the image are transmitted from the at least one processor to the display driving circuitry, in accordance with a video hybrid mode of mobile industry processor interface (MIPI) display serial interface (DSI).

11. The electronic device of claim 1, wherein the first portion of the image, the HSS packet, and the second portion of the image are transmitted from the at least one processor to the display driving circuitry, in accordance with an adaptive refresh panel (ARP) of mobile industry processor interface (MIPI) display serial interface (DSI).

12. A method executed in an electronic device including at least one processor and a display that comprises display driving circuitry and a display panel, the method comprising:
receiving, by the display driving circuitry, from the at least one processor, a first portion of an image to be displayed on a first horizontal line of an active area of the display panel;
after the first portion of the image is received, receiving, by the display driving circuitry, a pulse signal transmitted from the at least one processor to synchronize time in the display driving circuitry for display on the display panel with time in the at least one processor for display on the display panel;
identifying, by the display driving circuitry, whether a horizontal synchronization signal (HSS) packet for a second portion of the image to be displayed on a second horizontal line of the active area next to the first horizontal line is received from the at least one processor within a reference time period, the reference time period being from time receiving the pulse signal;
based on the HSS packet received within the reference time period, performing, by the display driving circuitry, a scan for display on the second horizontal line; and
based on the HSS packet not received within the reference time period, deferring, by the display driving circuitry, the scan.

13. The method of claim 12, wherein deferring the scan comprises:
deferring, by the display driving circuitry, the scan until receiving the HSS packet from the at least one processor within the reference time period being from another time receiving the pulse signal.

14. The method of claim 12, wherein deferring the scan comprises:
performing, by the display driving circuitry, the scan by performing a count for the second horizontal line based on the HSS packet received within the reference time period; and
deferring, by the display driving circuitry, the scan by refraining from the count based on the HSS packet not received within the reference time period.

15. The method of claim 12, wherein performing the scan comprises:
performing, by the display driving circuitry, using the second portion of the image received from the at least one processor after the HSS packet is received within the reference time period, the scan.
